# EUROPEAN PATENT APPLICATION

(11) **EP 1 265 242 A2**
(43) Date of publication of application: **11.12.2002**
(21) Application number: 02253247.7
(22) Date of filing: 09.05.2002
(51) Int. Cl.: G11B 27/10

(54) **Information recording-reproducing apparatus, and information retrieval program**

(30) Priority: 07.06.2001 JP 2001172820
(71) Applicant: Pioneer Corporation, Meguro-ku, Tokyo (JP)
(72) Inventor: 0kajima, Takahiro c/o Pioneer Corporation, Tokorozawa-shi, Saitama (JP); Yasukura, Tsuneki c/o Pioneer Corporation, Tokorozawa-shi, Saitama (JP); Ohkubo, Hirotoshi c/o Pioneer Corporation, Tokorozawa-shi, Saitama (JP); Inoue, Hiroya c/o Pioneer Corporation, Tokorozawa-shi, Saitama (JP); Hasegawa, Akihide c/o Pioneer Corporation, Tokorozawa-shi, Saitama (JP); Azuma, Kenji c/o Pioneer Corporation, Tokorozawa-shi, Saitama (JP)
(74) Representative: Haley, Stephen

(57) **Abstract**

When a request for retrieving digital content of a broadcast program, etc., recorded in a record section 5 is made through an operation section 11, information of an electronic program guide, etc., supplementary to the digital content is read from the record section 5 and is supplied to a video signal generation section 6. The video signal generation section 6 performs predetermined encode processing for the information of the electronic program guide, etc., and supplies to a monitor 8 for producing scroll display in the bottom portion of a display screen of the monitor 8 for use of retrieval, etc.

## Description

This invention relates to an information recording-reproducing apparatus for recording and reproducing digital content and in particular to an information recording-reproducing apparatus and an information retrieval program for recording and showing supplementary information to digital content.

In recent years, digitalization of content provided for the user, etc., has been going to move with development of the digitaltechnologies. For example, in the television broadcast field, a turning point has been reached in the transformation from analog television broadcasts to digital multichannel television broadcasts and an attempt has also been made to share digital content by intending a merger between communication media of the Internet, etc., and the television broadcast field.

As the advantages involved in such digitalization of content, not only content in various categories such as news and movie programs, but also various pieces of supplementary information for describing content, etc., are distributed, thereby making it possible to provide information fitted to needs of the user, etc.

As the supplementary information, for example, an electronic program table or an electronic program guide (EPG) distributed in digital multichannel television broadcasts is known. The titles of broadcast programs of content, the broadcast schedule date and start and end times, the categories, and details of the broadcast programs, and the like can be distributed and can be viewed by the user, etc., on a monitor screen. Further, as the user, etc., displays a specific category on the monitor screen and preselects a program for recording, the program desired by the user, etc., can be easily recorded by an information recording-reproducing apparatus for recording and reproducing digital content.

By the way, when the user, etc., reproduces the content of an already recorded program, etc., the information recording-reproducing apparatus in the related art can reproduce details supplementary to the content to be reproduced.

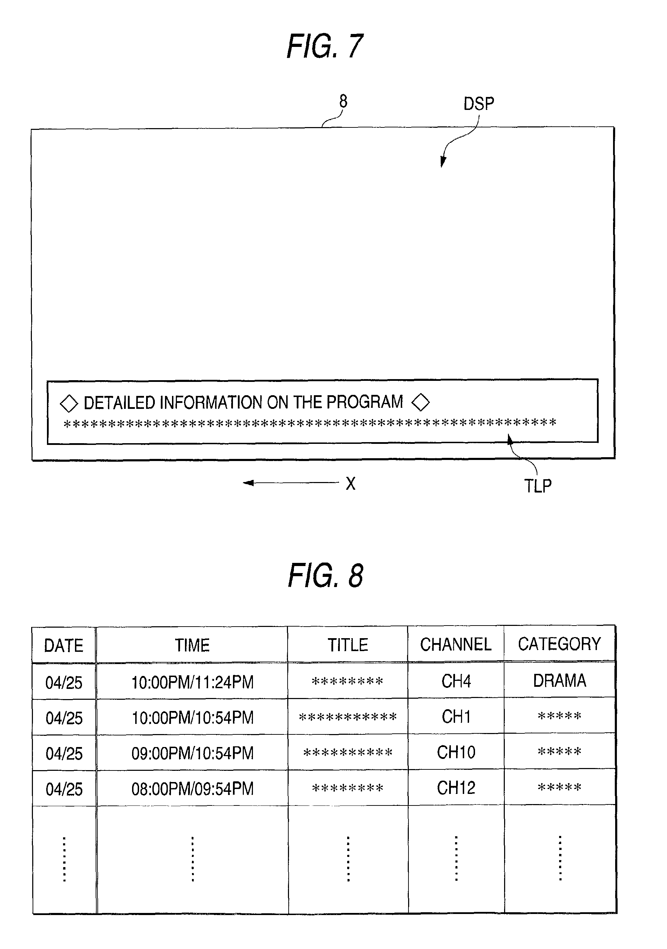

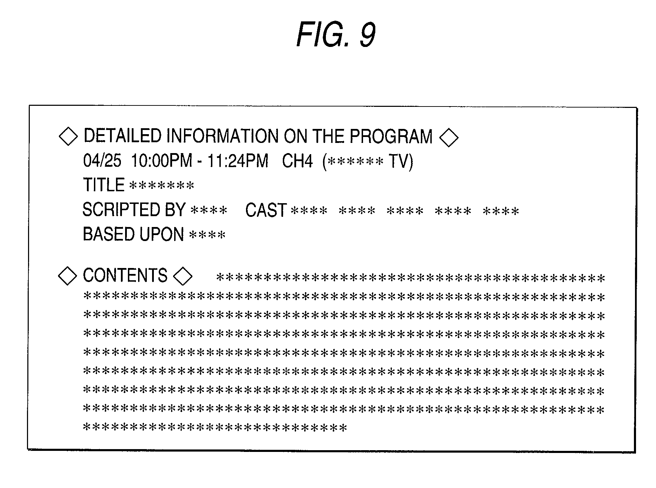

For example, if a plurality of broadcast programs are recorded, the electronic program guide data is also recorded together with the broadcast programs. After recording, if the user enters a retrieval command to reproduce any desired program, the already recorded programs are listed on the monitor screen, as illustrated in FIG. 8. Further, if the user, etc., specifies the title of any desired program out of the list, the data for introducing the contents of the program contained in the electronic program guide data, which will be hereinafter referred to as detailed information data, is displayed on the monitor screen, as illustrated in FIG. 9.

That is, if the category of the program displayed on the first row of the list illustrated in FIG. 8 is a drama, when the user, etc., specifies the title of the program, the title of the program, cast, the plot of the story, and the like recorded as the detailed information data are displayed on the display screen, as illustrated in FIG. 9.

Thus, the user, etc., can see the display of the detailed information data illustrated in FIG. 9 to check whether or not the program is the program to be reproduced. After checking, the user, etc., enters a reproduce start command, the desired program can be reproduced.

That is, the user, etc., specifies the title of any desired program in the list shown in FIG. 8 for displaying the detailed information data corresponding to the program, so that the user, etc., can retrieve the desired program.

However, the information recording-reproducing apparatus in the related art displays the detailed information on content in the whole display area of the monitor screen as illustrated in FIG. 9 and thus the user, etc., must determine whether or not the content is the content to be reproduced only from the contents of the detailed information displayed in the whole display area and cannot necessarily make precise retrieval; this is a problem.

Specifically, when the user, etc., records a serialized drama distributed more than once or a long-life program having the same title and differing in contents each time and attempts to retrieve any desired program from among the recorded programs, if the user, etc., see only the detailed information as shown in FIG. 9, he or she determines whether or not the program is the desired program based on his or her memory and thus cannot necessarily make precise retrieval; this is a problem.

It is therefore an object of the invention to provide an information recording-reproducing apparatus and an information retrieval program for enabling the user, etc., to more easily retrieve already recorded content to be reproduced.

To the end, according to the invention, there is provided an information recording-reproducing apparatus for recording one or more contents supplied from a source, comprising record section for recording the content and supplementary information relevant to the content, and display section for displaying the supplementary information relevant to the content recorded in the record section.

The described information recording-reproducing apparatus displays the supplementary information relevant to the content recorded in the record section for the user, etc., to retrieve content.

The information recording-reproducing apparatus may further comprise control section for producing scroll display of the supplementary information in a display area of the display section.

The described information recording-reproducing apparatus produces scroll display of the supplementary information relevant to the content recorded in the record section on the display section for simplifying content retrieval operation of the user, etc., and improving the convenience of the user, etc.

In the information recording-reproducing apparatus, the control section displays the supplementary information on the display section together with the content recorded in the record section.

The described information recording-reproducing apparatus displays the content recorded in the record section in a display area of the display section and produces scroll display of the supplementary information in a part of the display area together with the display of the content, thereby simplifying content retrieval operation of the user, etc., and improving the convenience of the user, etc.

In the information recording-reproducing apparatus, when displaying the content recorded in the record section on the display section, the control section controls switch between display and non-display of the supplementary information.

The described information recording-reproducing apparatus switches display between scroll display of the supplementary information relevant to the content in the display area of the display section and non-scroll display mode (namely, no scroll display is produced). Accordingly, when the user, etc., retrieves content, it is made possible for the user, etc., to see display of content or supplementary in formation or display of supplementary information together with display of content as required for simplifying content retrieval operation of the user, etc., and improving the convenience of the user, etc.

In the information recording-reproducing apparatus, the control section displays externally specified content or supplementary information of the one or more contents and the supplementary information recorded in the record section on the display section.

The described information recording-reproducing apparatus displays externally specified content or supplementary information on the display section. Therefore, if externally specified content or supplementary information is changed, the content or supplementary information displayed on the display section is changed accordingly for improving content retrieval accuracy of the user, etc.

To the end, according to the invention, there is provided an information retrieval program of an information recording-reproducing apparatus comprising record section for recording one or more contents supplied from a source, the information retrieval program making to perform record control section for recording the content and supplementary information relevant to the content in the record section, and display control section for displaying at least the supplementary information relevant to the content recorded in the record section on a display section.

Further, there is provided an information retrieval program of an information recording-reproducing apparatus comprising record section for recording one or more contents supplied from a source, the information retrieval program the steps of: recording the content and supplementary information relevant to the content in said recording section; anddisplaying at least the supplementary information relevant to the content recorded in said record section on display section.

According to the information retrieval program, the supplementary information relevant to the content recorded in the record section of the information recording-reproducing apparatus is displayed on the display section. The information retrieval program recorded on any of various media is installed in the information recording-reproducing apparatus or the information retrieval program is downloaded into the information recording-reproducing apparatus through a communication network, whereby it is made possible to give the content retrieval function to the information recording-reproducing apparatus.
[FIG. 1]

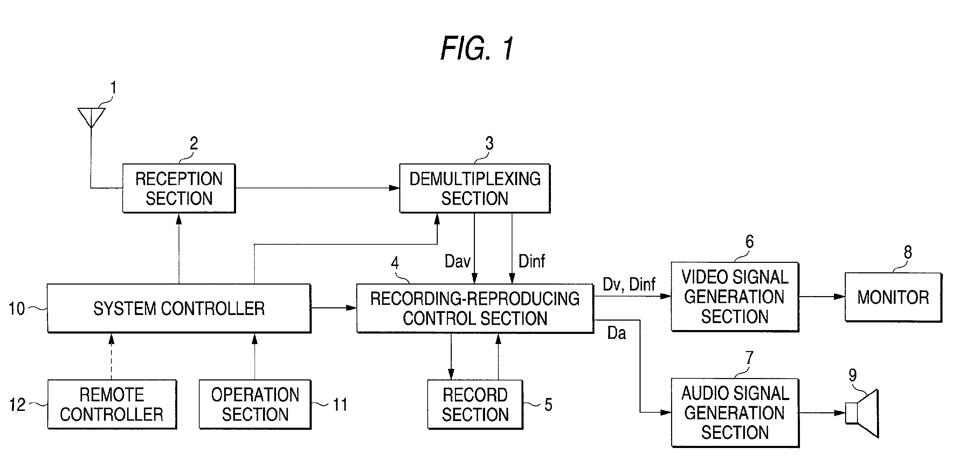

   FIG. 1 is a block diagram to show the configuration of an information recording-reproducing apparatus of an embodiment of the invention;
[FIG. 2]

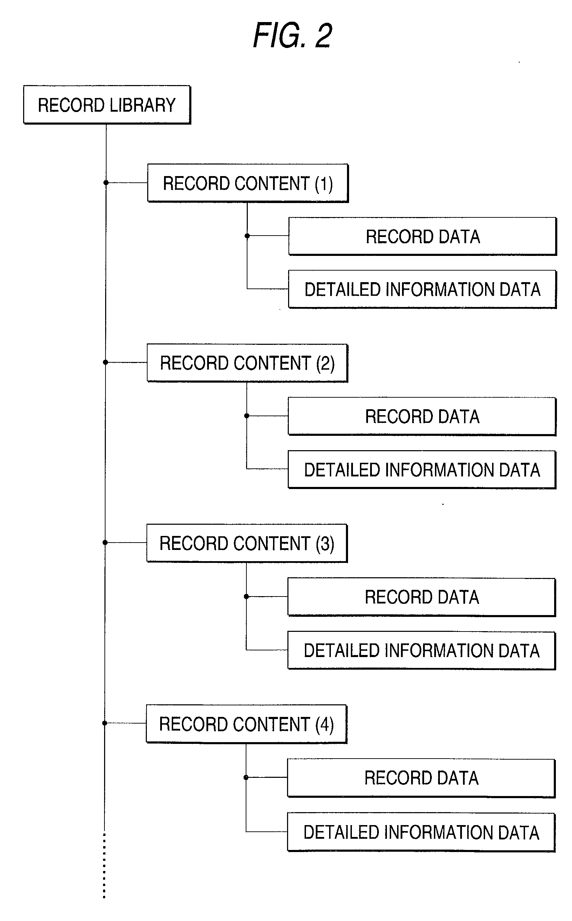

   FIG. 2 is a drawing to show a management algorithm of data recorded in a record section of the information recording-reproducing apparatus of the embodiment of the invention;
[FIG. 3]

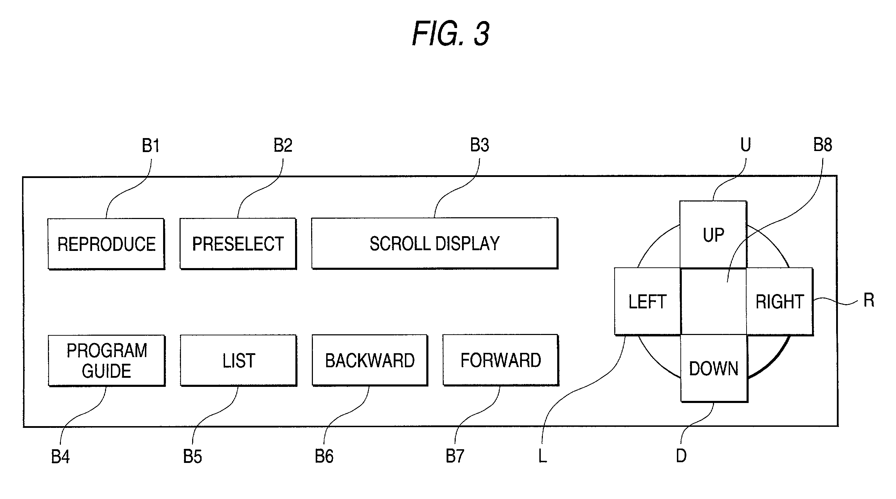

   FIG. 3 is a drawing to show representative keys of operation keys of an operation section of the information recording-reproducing apparatus of the embodiment of the invention;
[FIG. 4]

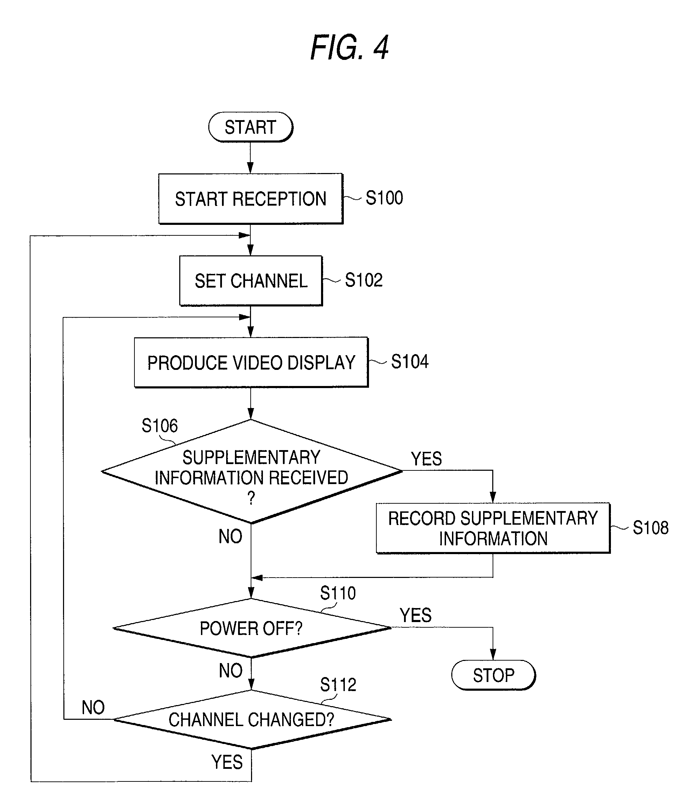

   FIG. 4 is a flowchart to describe the operation of the information recording-reproducing apparatus of the embodiment of the invention;
[FIG. 5]

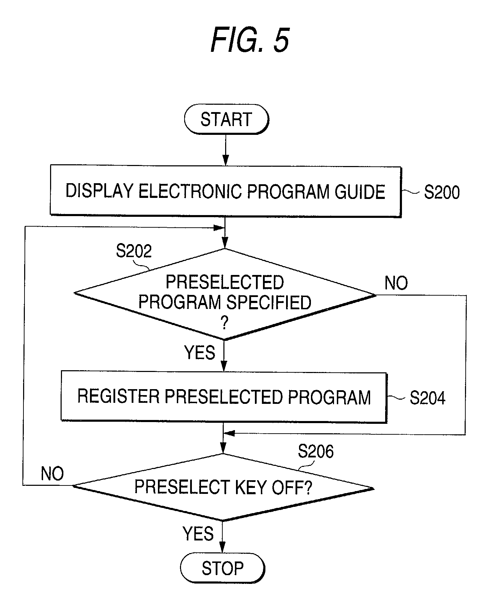

   FIG. 5 is another flowchart to describe the operation of the information recording-reproducing apparatus of the embodiment of the invention;
[FIG. 6]

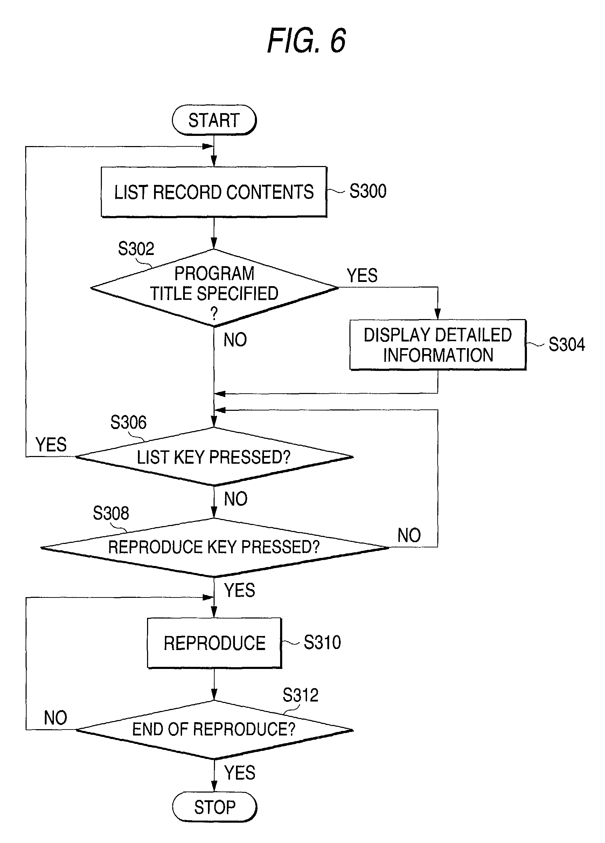

   FIG. 6 is another flowchart to describe the operation of the information recording-reproducing apparatus of the embodiment of the invention;
[FIG. 7]
   FIG. 7 is a drawing to show a display example of scroll display;
[FIG. 8]
   FIG. 8 is a drawing to show a listing method in a related art; and
[FIG. 9]
   FIG. 9 is a drawing to show a display method of detailed information in the related art.

Referring now to the accompanying drawings, there is shown a preferred embodiment of the invention. An information recording-reproducing apparatus for receiving a digital multichannel television broadcast and recording and reproducing received content (program) will be discussed as the embodiment of the invention. FIG. 1 is a block diagram to show the configuration of the information recording-reproducing apparatus.

In the figure, the information recording-reproducing apparatus receives airwaves distributed from a broadcast station and coming from a ground station or a satellite at an antenna 1 and RF-demodulates a received high-frequency signal by a reception section 2, thereby generating digital multichannel television data that can undergo signal processing.

The digital multichannel television data is supplied to a demultiplexing section 3, which then separates the digital multichannel television data into video data and audio data, which will be hereinafter referred to as video audio data Dav, and electronic program guide data of supplementary information, which will be hereinafter referred to as supplementary information data Dinf, and supplies the data Dav and the data Dinf to a recording-reproducing control section 4.

The recording-reproducing control section 4 performs processing as instructed from a system controller 10 (described later), namely, performs the following processing in response to an instruction for recording a broadcast program, reproducing a recorded broadcast program, or simply receiving and reproducing a broadcast program without recording or reproducing.

Upon reception of an instruction for simply receiving and reproducing a broadcast program without recording or playing back from the system controller 10, the recording-reproducing control section 4 supplies video data Dv of the video audio data Dav supplied from the demultiplexing section 3 to a video signal generation section 6 and supplies audio data Da of the video audio data Dav to an audio signal generation section 7. Further, when the supplementary information data Dinf sent from a broadcast station whenever necessary is supplied from the demultiplexing section 3, the recording-reproducing control section 4 supplies the supplementary information data Dinf to a record section 5 for recording.

As the video data Dv is thus supplied to the video signal generation section 6, a composite signal and video data are generated from the video data Dv and video of the received program is displayed on a screen of a monitor 8 and as the audio data Da is supplied to the audio signal generation section 7, an audio signal is generated from the audio data Da and audio of the received program is reproduced through a loudspeaker 9.

Further, the record section 5 comprises a hard disk drive (HDD) containing a large-capacity hard disk (HD) and as the recording-reproducing control section 4 supplies the supplementary information data Dinf to the record section 5, the supplementary information data Dinf is recorded on the hard disk.

When the most recent supplementary information data Dinf is sent from a broadcast station, the recording-reproducing control section 4 updates the supplementary information data already recorded on the hard disk to the most recent supplementary information data Dinf.

Next, upon reception of an instruction for recording a broadcast program from the system controller 10, the recording-reproducing control section 4 performs control to record the program being received in the record section 5.

That is, the recording-reproducing control section 4 supplies the video data Dv of the video audio data Dav supplied from the demultiplexing section 3 to the video signal generation section 6 and supplies the audio data Da of the video audio data Dav to the audio signal generation section 7, thereby displaying video on the monitor 8 and reproducing audio through the loudspeaker 9. In addition, the recording-reproducing control section 4 supplies the video audio data Dav to the record section 5, thereby recording the program being received on the hard disk.

The recording-reproducing control section 4 retrieves the supplementary information data Dinf already recorded in the record section 5, extracts the detailed information data corresponding to the current programbeing received and recorded, and records the extracted detailed information data and the video audio data Dav as record data in accordance with a predetermined algorithm in relation to each other, thereby conducting file management.

More specifically, as illustrated in FIG. 2, the detailed information data and the video audio data Dav being recorded are recorded in relation to each other in record content (1) of an identification file that can be identified and whenever the user, etc., enters a record command, record content (2) of another identification file, record content (3), record content (4), and so forth are newly created in order and the video audio data Dav being recorded and its corresponding detailed information data are recorded in each identification file in relation to each other.

The record contents are related to a directory called "record library," whereby one or more programs specified by the user, etc., are recorded in the record section 5.

The information recording-reproducing apparatus comprises a record preselection function for the user, etc., to preselect the program to be recorded. One or more programs are preselected by the record preselection function and when the time at which the preselected program is distributed is reached, the system controller 10 automatically instructs the recording-reproducing control section 4 to record the preselected program.

Therefore, the recording-reproducing control section 4 performs control for recording while conducting file management illustrated in FIG. 2 regardless of whether the user, etc., enters a command for recording the current program being viewed without preselection or preselects a program for recording.

However, to record the program preselected for recording, supplying the video data Dv and the audio data Da to the video signal generation section 6 and the audio signal generation section 7 is stopped, whereby the program is recorded only in the record section 5.

The detailed information data is the data of the title of the program, cast, the plot of the story, and the like contained in the electronic program guide data of the supplementary information sent from a broadcast station.

Next, upon reception of an instruction for reproducing the recorded broadcast program from the system controller 10, the recording-reproducing control section 4 retrieves the specified program from the record section 5 and supplies the video audio data Dav of the retrieved program (namely, the video data Dv and the audio data Da) to the video signal generation section 6 and the audio signal generation section 7 for reproducing video and audio.

Although described in detail later, if the user, etc., enters a command for listing the recorded programs to reproduce any recorded broadcast program, the recording-reproducing control section 4 supplies the supplementary information data Dinf of the programs recorded in the record section 5 to the video signal generation section 6, thereby listing the supplementary information data Dinf on the screen of the monitor 8.

If the user, etc., specifies "scroll display" to display the supplementary information data Dinf of the recorded programs in a part of the monitor screen, the recording-reproducing control section 4 supplies the video audio data Dav and the supplementary information data Dinf recorded in the record section 5 to the video signal generation section 6 and the audio signal generation section 7, thereby displaying the supplementary information data Dinf in a part of the monitor screen while displaying reproduced video on the screen of the monitor 8.

When the video data Dv or the supplementary information data Dinf is supplied from the recording-reproducing control section 4, the video signal generation section 6 decodes the data Dv and Dinf subjected to predetermined data compression processing and further performs predetermined encode processing for the decoded data, thereby generating and outputting a digital video signal and an analog composite signal. Accordingly, if the monitor 8 covers digital mode, video display can be produced by the digital video signal and if the monitor 8 covers analog mode, video display can be produced by the analog composite signal.

If the user, etc., specifies the above-mentioned "scroll display," the recording-reproducing control section 4 supplies the video data Dv of the video audio data Dav and the supplementary information data Dinf recorded in the record section 5 to the video signal generation section 6. In this case, the video signal generation section 6 decodes the video data Dv and the supplementary information data Dinf and mixes the decoded video data and supplementary information data according to a predetermined synchronization timing, thereby generating superposed video data comprising the supplementary information data superposed on the video data, and further encodes the superposed video data, thereby generating and outputting a digital video signal and an analog composite signal.

When the audio data Da of the video audio data Dav is supplied from the recording-reproducing control section 4, the audio signal generation section 7 decodes the audio data Da subjected to predetermined data compression processing, converts the decoded audio data into an analog audio signal of the audio-frequency region as D/A conversion, and supplies the analog audio signal to the loudspeaker 9, etc., for producing a sound.

The system controller 10 has a microprocessor (MPU) and the microprocessor executes a preset system program, thereby managing the whole operation of the information recording-reproducing apparatus in a centralized manner.

Further, an operation section 11 comprising a plurality of operation keys for the user, etc., to select any desired function from among a plurality of functions of the information recording-reproducing apparatus is connected to the system controller 10 and in addition, the system controller 10 comprises a remote controller 12 for performing remote operation in place of the operation section 11.

The user, etc., can operate an operation key of the operation section 11 or the remote controller 12 to set the channel of the broadcast station being tuned, enter a record or reproduce command, a record preselection command, a command for listing the recorded programs, a "scroll display" command, etc.

Representative operation keys of the operation section 11 and the remote controller 12 are a reproduce key B1 for reproducing the program recorded in the record section 5, a preselect key B2 for preselecting a program for recording, a scroll display key B3 for specifying "scroll display," a program guide key B4 for displaying an electronic program guide, a list key B5 for listing the programs recorded in the record section 5, a backward key B6 and a forward key B7 for changing and reproducing the programs recorded in the record section 5 one after another, and a cursor move key B8 for moving the position of a cursor displayed on the screen of the monitor 8.

Next, the operation of the described information recording-reproducing apparatus will be discussed with reference to FIGS. 4 to 7.

FIG. 4 is a flowchart to show the operation of the information recording-reproducing apparatus for simply receiving and reproducing a broadcast program without recording or reproducing, FIG. 5 is a flowchart to show the operation of the information recording-reproducing apparatus for preselecting a program for recording, FIG. 6 is a flowchart to show the operation of the information recording-reproducing apparatus for listing the recorded broadcast programs, and FIG. 7 is a drawing to show a display example of scroll display.

First, in FIG. 4, when the user, etc., turns on a power key of the operation section 11 or the remote controller 12, reception is started (step S100) and further the channel of the broadcast station specified by a channel setting operation key of the operation section 11 or the remote controller 12 is set (step S102). The video signal generation section 6 and the audio signal generation section 7 generate a digital video signal and a composite signal and an audio signal based on video audio data Dav output from the demultiplexing section 3, whereby video display on the monitor 8 and audio reproduce through the loudspeaker 9 are performed (step S104).

Next, whether or not electronic program guide information from a broadcast station is received is determined based on the output of the demultiplexing section 3 (step S106). If supplementary information data Dinf is output from the demultiplexing section 3, the recording-reproducing control section 4 supplies the supplementary information data Dinf to the record section 5 for recording (step S108).

Next, at step S110, whether or not the user, etc., turns off the power key of the operation section 11 or the remote controller 12 is determined. If the user, etc., turns off the power key, the reception operation is terminated; if the user, etc., does not turn off the power key, whether or not the broadcast station channel is changed is determined at step S112. If the channel is changed to another channel, control goes to step S102 and this channel is set and the process starting at step S104 is continued; if the channel is not changed, the process starting at step S104 is repeated with the setup channel intact.

As airwaves are thus received, the program specified by the user, etc., is reproduced on the monitor 8 and through the loudspeaker 9.

If new supplementary information is sent from a broadcast station during the reception, the supplementary information data already recorded in the record section 5 is updated to the new supplementary information data Dinf at step S108 so as to always record the most recent supplementary information data in the record section 5.

Next, the record preselection operation will be discussed with reference to FIG. 5. The record preselection can be specified by the user, etc., at any time during the reception shown in FIG. 4. When the user, etc., turns on the preselect key B2 and the program guide key B4 shown in FIG. 3, the record preselection process starting at step S200 is started.

First, at step S200, the recording-reproducing control section 4 transfers the supplementary information data Dinf already recorded in the record section 5 to the video signal generation section 6 for displaying an electronic program guide on the screen of the monitor 8.

Here, if the user, etc., operates the cursor move key B8 shown in FIG. 3, the system controller 10 detects the key operation and instructs the recording-reproducing control section 4 to supply OSD data for cursor display to the video signal generation section 6. Accordingly, the cursor displayed together with the electronic program guide can be moved by operating the cursor move key B8. If an upper end part U of the cursor move key B8 is pressed, the cursor position is moved upward relative to the electronic program guide displayed on the screen of the monitor 8 based on the OSD data; if a lower end part D of the cursor move key B8 is pressed, the cursor position is moved downward relative to the electronic program guide displayed on the screen of the monitor 8 based on the OSD data; if a left end part L or a right end part R of the cursor move key B8 is pressed, the cursor position is moved left or right relative to the electronic program guide displayed on the screen of the monitor 8 based on the OSD data.

If the user, etc., moves the cursor to the display item of each program displayed in the electronic program guide and presses the center portion of the cursor move key B8, any desired program to be preselected can be specified.

If the user, etc., specifies the program to be preselected by operating the cursor move key B8 at step S202, control goes to step S204 and the system controller 10 checks the correspondence relation of the cursor to the display item in the electronic program guide for acknowledging the program to be preselected, and notifies the recording-reproducing control section 4 of the acknowledged program. The recording-reproducing control section 4 extracts the detailed information data relevant to the program to be preselected from the supplementary information data Dinf recorded in the record section 5, relates the detailed information data to a record preselection file (not shown), and conducts file management, thereby preselecting the program to be recorded.

Next, at step S206, whether or not the user, etc., turns off the preselect key B2 is determined. If the user, etc., does not turn off the preselect key B2, control returns to step S202 and the process is repeated. If the user, etc., turns off the preselect key B2, the record preselection process is terminated and the state is restored to the state before the record preselection is started.

That is, whenever the user, etc., presses the preselect key B2, off and on operation commands are given alternately to the system controller 10 and the user, etc., can enter record preselection start and end commands in response to the on operation and the off operation.

If the user, etc., preselects a plurality of programs by operating the cursor move key B8 with the preselect key B2 on, the detailed information data corresponding to the preselected programs is related to the record preselection file and file management is conducted, whereby a plurality of programs are preselected.

If the user, etc., thus preselects the program for recording, whenever the broadcast date and time of the preselected program come, the system controller 10 sets the reception state and records the video audio data Dav and the detailed information data of the preselected program in an identification file in relation to each other in the record sections. If the user, etc., preselects a plurality of programs for recording, the system controller 10 records the video audio data Dav and the detailed information data of each of the preselected programs in an identification file in relation to each other in the record section 5.

Next, the operation of the information recording-reproducing apparatus for reproducing a recorded broadcast program will be discussed with reference to FIG. 6. If the main power of the information recording-reproducing apparatus is on, processing for reproducing any recorded broadcast program is performed at any time as instructed by the user, etc.

If the user, etc., turns on the list key B5 shown in FIG. 3, processing for reproducing any recorded broadcast program is started. First, at step S300, the recording-reproducing control section 4 retrieves the identification files of the record contents in the record library recorded in the record section 5. The recording-reproducing control section 4 reads the detailed information data related to the record data in each identification file and transfers the detailed information data to the video signal generation section 6 for listing the programs already recorded in the record section 5 on the screen of the monitor 8.

Accordingly, a program list similar to that shown in FIG. 8, for example, is displayed on the screen of the monitor 8.

Here, if the user, etc., moves the position of the cursor displayed together with the program list by operating the cursor move key B8 and further presses the center portion of the cursor move key B8, at step S302, the system controller 10 determines that the title of the program is specified, and further detects the title of the program pointed to by the cursor and sends the detection result to the recording-reproducing control section 4.

The process goes to step S304 and the recording-reproducing control section 4 retrieves the detailed information data corresponding to the specified program from the record section 5 and supplies the retrieved detailed information data to the video signal generation section 6 for displaying the detailed information data on the screen of the monitor 8. For example, detailed information similar to that shown in FIG. 9 is displayed on the screen of the monitor 8.

Next, at step S306, the system controller 10 determines whether or not the list key B5 is again pressed. If the list key B5 is pressed, control goes to step S300 and the program list is displayed and then the process starting at step S302 is repeated.

On the other hand, if it is determined at step S306 that the user, etc., does not press the list key B5, control goes to step S308 and the system controller 10 determines whether or not the reproduce key B1 is turned on. If the reproduce key B1 is not pressed, the system controller 10 goes to step S306.

Thus, steps S300 to S308 are repeated until the reproduce key B1 is turned on, and the user, etc., can see the detailed information on each program while seeing the list of the programs already recorded in the record section 5.

If it is determined at step S308 that the reproduce key B1 is turned on, the system controller 10 determines that a reproduce start command is given, and control goes to step S310 for reproducing.

At step S310, reproducing the program specified by the user, etc., out of the program list by operating the cursor move key B8 at steps S300 to S308 is started. That is, if the user, etc., specifies the program to be reproduced by operating the cursor move key B8 and enters a reproduce start command by operating the reproduce key B1, the recording-reproducing control section 4 retrieves the identification file of the record content corresponding to the specified program, reads the record data related to the detailed information data in the retrieved identification file (namely, video audio data Dav) from the record section 5 in order at a predetermined reproduce time, and supplies the video audio data Dav to the video signal generation section 6 and the audio signal generation section 7. Accordingly, video of the already recorded program specified by the user, etc., is displayed on the monitor 8 and audio is reproduced through the loudspeaker 9.

When the reproduce key B1 is turned off or reproducing the specified program terminates at step S312, the reproduce operation is terminated.

If the scroll display key B3 is turned on during the reproduce processing at step S310, the system controller 10 instructs the recording-reproducing control section 4 to read also the detailed information data of the current program being reproduced from the record section 5 and supply the detailed information data to the video signal generation section 6.

At this time, the recording-reproducing control section 4 reads character code data forming the detailed information data one piece at a time at a predetermined timing according to the text arrangement order and supplies the data to the video signal generation section 6 without supplying the detailed information data at once to the video signal generation section 6.

Therefore, if the scroll display key B3 is turned on, video of the program specified by the user, etc., and the detailed information on the program are displayed on the monitor 8 at the same time.

However, since the detailed information data is supplied to the video signal generation section 6 for each piece of character code data, the video of the program is displayed almost on the whole of screen DSP of the monitor 8 and the detailed information is displayed in text in the bottom portion of the screen DPS, as shown in FIG. 7. Further, the text is displayed while it is moved (scrolled) at a predetermined speed in the direction indicated by the arrow X in FIG. 7, namely, from right to left.

The text of the detailed information displayed while being scrolled is called scroll display TLP.

Whenever displaying all the detailed information data corresponding to the program being reproduced is complete as scroll display TLP, the recording-reproducing control section 4 repeats processing for displaying the detailed information data as scroll display TLP from the beginning.

Thus, if the user, etc., turns on the scroll display key B3 in the reproduce mode, he or she can see the detailed information on the program while seeing the desired program. Further, the detailed information, which is displayed as the scroll display TLP, can be presented to the user, etc., without obstructing the video of the program.

Further, if the user, etc., turns off the scroll display key B3 during the reproduce processing at step S310, the system controller 10 detects it and instructs the recording-reproducing control section 4 to stop supplying the detailed information data to the video signal generation section 6.

Thus, the scroll display TLP shown in FIG. 7 disappears out of the screen of the monitor 8 and the user, etc., can see only the video of the desired program.

Further, if the user, etc., presses the forward key B7 during the reproduce processing at step S310 in FIG. 6, the system controller 10 determines that the program next to the current program being reproduced is to be reproduced, and instructs the recording-reproducing control section 4 to reproduce the next program. Upon reception of the instruction, the recording-reproducing control section 4 retrieves the identification file next to the identification file of the current program being reproduced and supplies the record data in the retrieved identification file (namely, video audio data Dav) to the video signal generation section 6.

For example, if the forward key B7 is pressed while the record data of record content (1) shown in FIG. 2 is being reproduced, the record data of the next record content (2) is reproduced. Whenever the forward key B7 is pressed, the remaining record contents (3), (4), and the like are reproduced in order.

Further, if the user, etc., presses the backward key B6 during the reproduce processing at step S310 in FIG. 6, the system controller 10 determines that the program immediately preceding the current program being reproduced is to be reproduced, and instructs the recording-reproducing control section 4 to reproduce the preceding program. Upon reception of the instruction, the recording-reproducing control section 4 retrieves the identification file immediately preceding the identification file of the current program being reproduced and supplies the record data in the retrieved identification file (namely, video audio data Dav) to the video signal generation section 6.

Whenever the backward key B6 is pressed, the remaining record contents are reproduced in reverse order.

Thus, whenever the user, etc., presses the forward key B7 or the backward key B6 appropriately during the reproduce mode, the reproduced program is changed, so that the user, etc., can visually retrieve any desired program while changing video displayed on the monitor 8 by pressing the forward key B7 or the backward key B6.

Further, if the user, etc., turns on the scroll display key B3 and presses the forward key B7 or the backward key B6, video on monitor 8 is changed for each program and at the same time, the detailed information data corresponding to the program is displayed as scroll display TLP.

Thus, as the user, etc., operates the scroll display key B3 and the forward key B7 or the backward key B6 together, the user, etc., can see the detail information provided as scroll display and retrieve any desired program without seeing the video of the program being retrieved to the end.

If the user, etc., again turns on the reproduce key B1 after retrieving any desired program, the system controller 10 controls reproduce processing so as to reproduce the retrieved program from the beginning and if the user, etc., turns on the list key B5, the system controller 10 terminates reproduce and performs control so as to start the process starting at step S300 in FIG. 6.

Thus, the extremely highly flexible and easy-to-operate retrieval method can be provided for the user, etc., as the user, etc., operates the scroll display key B3 and the forward key B7 or the backward key B6 and the list key B5.

As described above, while displaying the video of an already recorded program on the monitor 8, the information recording-reproducing apparatus of the embodiment displays the detailed information on the program as scroll display TLP at thesametime. Thus, for example, for the user, etc., to retrieve any desired program, it is made possible for the user, etc., to find out the desired program more reliably as he or she sees video and detailed information displayed on the monitor 8.

Although not described in detail above, if the user, etc., turns on the scroll display key B3 in simple reception without recording or reproducing, the recording-reproducing control section 4 supplies the detailed information data recorded in the record section 5 to the video signal generation section 6 in order for producing scroll display TLP similar to that shown in FIG. 7 in the portion below the video of the program being received as instructed by the system controller 10.

Further, whenever the user, etc., presses the backward key B6 or the forward key B7 when the scroll display TLP is produced, the system controller 10 determines that the detailed information on the next program recorded in the record section 5 is to be displayed, and supplies the corresponding detailed information data to the video signal generation section 6 for producing scroll display TLP on the monitor 8.

Thus, the user, etc., can see the detailed information on the program already recorded in the record section while seeing the program being received and extremely highly flexible retrieval method can be provided, for example.

In the description made so far, the electronic program guide information provided by a digital multichannel television broadcast is used as supplementary information data to produce scroll display TLP. However, the invention makes it possible to produce scroll display TLP based on supplementary information to content supplied through communication media of the Internet, etc.

As shown in FIG. 1, the microprocessor placed in the system controller 10 executes the system program (computer program), thereby exerting the retrieval function described above. Therefore, the information retrieval program for exerting the retrieval function, of the system program may be supplied through communication media of the Internet, etc., and downloaded into the information recording-reproducing apparatus, thereby giving the retrieval function described above. In addition to communication media of the Internet, etc., a storage medium such as a CD or a DVD recording the information retrieval program for exerting the retrieval function may be provided for installing the information retrieval program in the information recording-reproducing apparatus, thereby giving the retrieval function described above. To provide the information retrieval program by means of such communication media or a storage medium, the information recording-reproducing apparatus can be provided with communication section for conducting communications with the communication network, reproduce section for reproducing the record information on the storage medium or separate communication section for conducting communications with the communication network, separate reproduce section for reproducing the record information on the storage medium can be used to download or install the information retrieval program into or in the information recording-reproducing apparatus, thereby giving the retrieval function described above.

The supplementary information is not limited to the electronic program guide information. For example, text information contained in a bilingual broadcast distributed by a television broadcast and the like can also be used as the supplementary information.

As described above, the information recording-reproducing apparatus of the invention displays the supplementary information to the content recorded in the record section or produces scroll display of the supplementary information on the display section, so that it is made possible for the user, etc., to display the video of the content in the display area of the display section and retrieve the content recorded in the record section while seeing the video of the content.

Scroll display of the supplementary information relevant to the content is produced on the display section or is turned off. Thus, for example, when the user, etc., retrieves the content recorded in the record section while seeing the video of the content, it is made possible for the user to make retrieve using the scroll display; when the retrieval is complete, it is made possible for the user to turn off the scroll display, so that the convenience of the user can be improved.

Since content or supplementary information specified from the outside of the user, etc., is displayed on the display section, a retrieval method excellent in convenience and operability can be provided.

The information retrieval program of the invention is downloaded into the information recording-reproducing apparatus through communication medium or is installed in the information recording-reproducing apparatus from a storage medium, whereby the content retrieval function can be given to the information recording-reproducing apparatus.

## Claims

1. An information recording-reproducing apparatus for recording one or more contents supplied from a source,
said information recording-reproducing apparatus comprising:
record section for recording the content and supplementary information relevant to the content; and
display section for displaying the supplementary information relevant to the content recorded in said record section.

2. The information recording-reproducing apparatus as claimed in claim 1, further comprising:
control section for producing scroll display of the supplementary information in a display area of said display section.

3. The information recording-reproducing apparatus as in claim 1, wherein
said control section displays the supplementary information on said display section together with the content recorded in said record section.

4. The information recording-reproducing apparatus as in claim 1, wherein
when displaying the content recorded in said record section on said display section, said control section controls switch between display and non-display of the supplementary information.

5. The information recording-reproducing apparatus as in claim 1, wherein
said control section displays externally specified content or supplementary information of the one or more contents and the supplementary information recorded in said record section on said display section.

6. An information retrieval program of an information recording-reproducing apparatus comprising record section for recording one or more contents supplied from a source,
said information retrieval program makes to perform:
record control section for recording the content and supplementary information relevant to the content in said record section; and
display control section for displaying at least the supplementary information relevant to the content recorded in said record section on a display section.

7. An information retrieval program of an information recording-reproducing apparatus comprising record section for recording one or more contents supplied from a source,
said information retrieval program the steps of:
recording the content and supplementary information relevant to the content in said recording section; and
displaying at least the supplementary information relevant to the content recorded in said record section on display section.
